Europäisches Patentamt

European Patent Office

Office européen des brevets

(11) Publication number: **0 046 387**
**A1**

## EUROPEAN PATENT APPLICATION

(21) Application number: **81303717.3**

(22) Date of filing: **14.08.81**

(51) Int. Cl.³: **B 01 D 53/34**

(30) Priority: **18.08.80 GB 8026818**

(43) Date of publication of application: **24.02.82**
**Bulletin 82/8**

(84) Designated Contracting States: **AT BE DE GB NL**

(71) Applicant: **DAVY McKEE (MINERALS & METALS) LIMITED, Ashmore House, Stockton-on-Tees Cleveland TS18 3HA (GB)**

(72) Inventor: **Scarlett, John, 2 Cleveland View Kirk Merrington, Spennymoor Co. Durham DL16 7JZ (GB)**
Inventor: **Reason, Arthur James, 30 Mersehead Sands, Middlesbrough Cleveland (GB)**

(74) Representative: **Eyles, Christopher Thomas et al, BATCHELLOR, KIRK & EYLES 2 Pear Tree Court Farringdon Road, London, EC1R 0DS (GB)**

(54) **Process for the selective removal of hydrogen halide from a gas.**

(57)    A process is described for selective removal of hydrogen halide, e. g. hydrogen chloride, from a gas containing same by intimately contacting the gas with an aqueous liquor containing a water soluble halide, such as calcium chloride, dissolved therein whose pH lies in the range of from about 0.1 to about 3.0.

ACTORUM AG

PROCESS

This invention relates to a process for the selective removal of a hydrogen halide from a gas containing same.

Hydrogen halides are potential atmospheric pollutants present in waste gases from various sources, such as incinerator flue gases, brickworks flue gases, smelter off-gases, power station flue gases, and the like. In addition, their presence in gases can give rise to corrosion problems in gas treatment plants.

Incinerators, such as those normally used to dispose of unwanted chlorinated by-products of a vinyl chloride plant, produce HCl-containing flue gases. HCl-containing flue gases may be produced from smelters. Brickworks flue gases contain a significant concentration of hydrogen halides, particularly of HF. Such flue gases should be treated for the removal of hydrogen halides before their emission to the environment.

Coal from some sources may contain significant proportions of chlorine (e.g. up to about 1 wt % or more) which appears in the stack or furnace gases from a coal-burning furnace in the form of hydrogen chloride. In addition, the furnace exhaust gases contain significant amounts of sulphur dioxide which arises from oxidation of the sulphur content of the coal, which may constitute up to about 2 wt % or more of the coal. In view of the increasing world wide concern regarding the harmful effects on the environment of acidic gaseous pollutants, particularly sulphur dioxide, there is increasing pressure by way of legislation to control the emission of sulphur dioxide by power stations and other large coal-fired plants. To this end, various processes have been developed for removal of sulphur dioxide from flue gases, including the Wellman-Lord $SO_2$ recovery process, the magnesium oxide-based $SO_2$ absorption processes, the double alkali $SO_2$ absorption processes, and the lime-gypsum $SO_2$ absorption processes. In at least some of these processes HCl is a problem because, unless first removed from the flue gas, it can lead to increased corrosion of the plant. Hence, in a Wellman-Lord $SO_2$ recovery plant, it is usual to pretreat the flue gas using a water washing step which removes the majority of the HCl present prior to the $SO_2$ removal step as well as scrubbing out fly ash. This is particularly important when treating flue gases containing significant quantities of HCl, such as would be produced by burning a coal containing at least about 0.1 wt % chlorine. In order to limit the acidic effluent from such a pre-washing step, it is usual to recirculate the scrubbing water. Such a washing step is an expedient method of HCl removal when the HCl concentration in the flue gas is low. However, a problem arises when treating flue gases from a plant burning coal with a high chlorine content (e.g. about 0.4 wt % chlorine). Such flue gases may contain, for example, about 0.144 vol % $SO_2$ and about 0.029 vol % HCl.

Since the vapour pressure in equilibrium with an aqueous hydrochloric acid solution is dependent on the HCl concentration, there is an upper limit to the concentration of HCl in the recirculating scrubbing liquor that can be tolerated in order to achieve the desired degree of HCl removal. In practice, about 1 wt % HCl solution is as strong an acid as can be tolerated for use in the washing pre-treatment step of a Wellman-Lord $SO_2$ recovery plant. Thus, if water washing were used, for example, for HCl removal prior to $SO_2$ recovery by the Wellman-Lord process from a flue gas from a 2000 MW power station burning a high chlorine content coal (e.g. a coal containing about 0.4 wt %
chlorine), there would be generated approximately 2,000,000
U.S. gallons/day (7.5 million litres/day) of 1 wt % HCl
solution, the disposal of which represents a considerable
problem to the power station operator since it cannot simply
be discharged to the environment and is too dilute to be
generally useful.

There is therefore a need to provide an improved
process for the selective removal of hydrogen halides from
gases containing same and possibly also other acidic gases
such as sulphur dioxide, which will result in manageable
quantities of waste liquors and/or which will yield useful
by- products.

The invention accordingly seeks to provide an
improved process for the selective removal of hydrogen
halides from gases containing also other acidic gases, such
as sulphur dioxide and carbon dioxide.

According to the present invention, there is
provided a process for the selective removal of hydrogen
halide from a gas containing same comprising intimately
contacting the gas with an aqueous liquor containing a water
soluble halide dissolved therein whose pH lies in the range
of from about 0.1 to about 3.0.

Besides hydrogen halide, e.g. hydrogen chloride,
hydrogen fluoride, hydrogen bromide or hydrogen iodide, the
gas may contain other acidic constituents, such as sulphur
dioxide. Thus the invention provides a process for the
selective removal of hydrogen halide in the presence of
other acidic gaseous components.

In a preferred process, the hydrogen halide-
containing gas is scrubbed with a recirculating aqueous
liquor containing a water soluble halide dissolved therein
and the pH of the recirculating liquor is maintained within the range of from about 0.1 to about 3.0 by controlled addition of an alkali thereto.

The concentration of the water soluble halide may vary within wide limits, for example from about 1 wt % up to the solubility limit of the halide in the aqueous liquor. Typically however the water soluble halide concentration is at least about 3 wt %  up to the solubility limit of the halide in the aqueous liquor, e.g. up to about 70 wt %.

The water soluble halide preferably contains the halide ion of the hydrogen halide to be absorbed. Preferably, the water soluble halide is an alkali metal or alkaline earth metal halide.  Amongst water soluble halides, there can be mentioned calcium chloride, calcium bromide, calcium iodide, potassium chloride, potassium fluoride, and the like.

Preferably, the pH of the liquor lies within the range of from about 0.1 to about 2.5, for example in the range of from about 1.5 to 2.0.

According to a particularly preferred procedure, hydrogen chloride is selectively removed from a gas containing same by intimately contacting the gas with an aqueous liquor containing from about 3 wt % to about 70 wt % of calcium chloride, e.g. about 30 wt % calcium chloride, whose pH lies within the range of from about 0.1 to about 2.8, e.g. in the range of from about 1.5 to about 2.0. Usually it will be convenient to scrub the gas using such a procedure with a recirculating liquor, the pH of which is maintained within the desired range by controlled addition of lime and/or milk of lime thereto.  Hence, the cation of the alkali used for neutralisation is the same as the cation of the water soluble halide.

When using a water soluble halide other than a calcium halide, e.g. when using a liquor containing
potassium fluoride for selectively removing HF from a gas,
it is similarly preferred to use an alkali containing the
same cation as the water soluble halide, i.e. potassium
hydroxide or potassium carbonate when using potassium
fluoride.

In use of the process of the invention for
selective removal of HCl from a sulphurous flue gas, such as
a power station flue gas (which also contains $SO_2$), it is
possible to operate using a solution of appropriate pH
containing, for example, from about 3 wt % to about 6 wt %
calcium chloride, and lime as neutralising agent. In such a
case, there may be produced in a plant for treating the flue
gas from a 2000 MW coal-fired station, for example, about
500,000 U.S. gallons/day (1892650 litres/day) to 1,000,000
U.S. gallons/day (3785300 litres/day) of 3 wt % to 6 wt %
neutralised calcium chloride solution.  In an alternative
procedure, when using a 30 wt % calcium chloride solution
for treating the waste gas from the same power station,
there is produced about 90,000 U.S. gallons/day (340675
litres/day) of 30 wt % neutralised calcium chloride
solution;  this can be evaporated to about 70 wt % calcium
chloride and converted to calcium chloride flake which can
be sold as such.

The use of an acid liquor of controlled pH within
the range of from about 0.1 to about 3.0 is an important
feature of the invention.  Under such pH conditions, HCl is
readily absorbed from a gas containing same.  The efficiency
of removal of HCl from the gas is dependent to a large
extent on the concentration of water soluble halide
dissolved in the aqueous liquor since this affects the
vapour pressure of HCl above the liquor at a particular HCl

concentration.

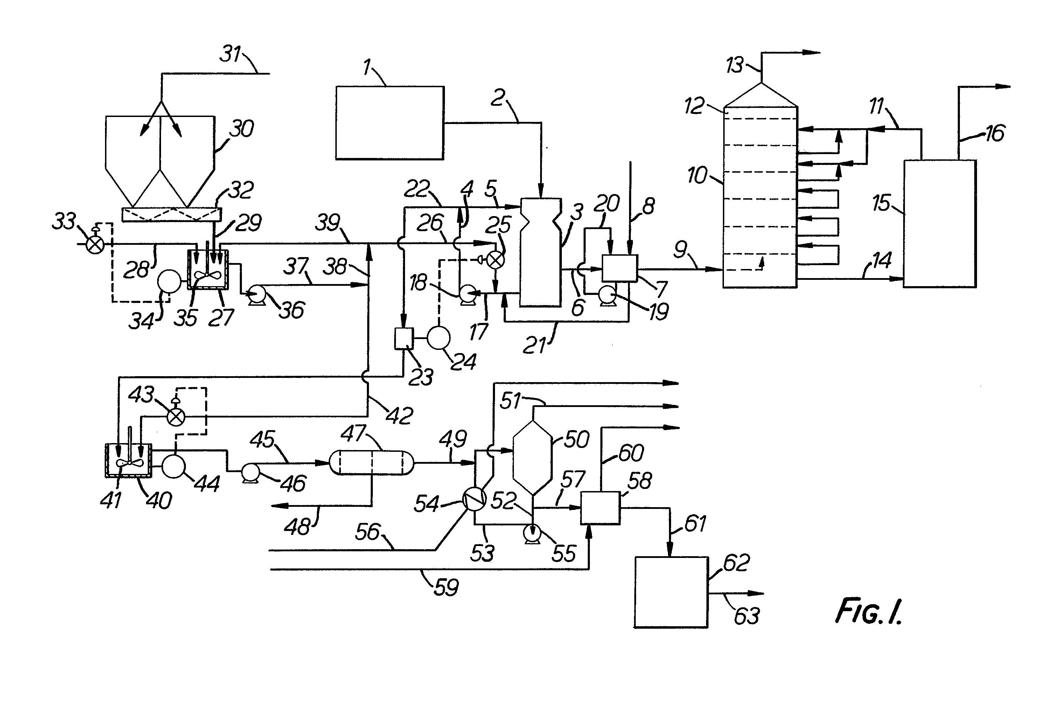

In order that the invention may be clearly understood and readily carried into effect, a preferred process in accordance with the invention will now be described, by way of example only, with reference to Figure 1 of the accompanying drawings, which is a diagrammatic flow sheet of a plant for selective removal of hydrogen chloride from a furnace waste gas and subsequent removal of sulphur dioxide.

Referring to Figure 1 of the drawings, flue gas from a coal-fired plant 1, such as a 2000 MW electric power station, is supplied via line 2 to the inlet duct of one of a number of variable throat Venturi scrubbers 3. Twelve such scrubbers 3 are provided but, for the sake of simplicity, only one is shown in the drawing. Such a flue gas from a 3 x 660 MW power station burning 755.6 tonnes/h coal contains 3.1 tonnes/h of HCl and 26.9 tonnes/h of $SO_2$ when a coal is burnt having the following analysis:

| Constituent | Weight % |
| --- | --- |
| Carbon | 59.2 |
| Moisture | 8.0 |
| Hydrogen | 3.8 |
| Sulphur | 2.0 |
| Chlorine | 0.4 |
| Nitrogen | 1.1 |
| Oxygen | 5.5 |
| Ash | 20.0 |

An aqueous scrubbing liquor containing 30 wt %
calcium chloride and having a pH of 1.7 is supplied through
line 4 to a ring headder system 5 from which it is sprayed
into the path of flue gas through each of the scrubbers 3,
upstream from its respective throat, through a plurality of
spray nozzles (not shown). Substantially all HCl in the
flue gas is selectively absorbed in the liquor as the flue
gas passes through scrubbers 3. At the same time, fly ash
is scrubbed from the flue gas and the flue gas is cooled to
a temperature of about 60°C and is at least partly
saturated with water vapour. The HCl-loaded liquor collects
in a pool at the bottom of each of the scrubbers 3 whilst
the scrubbed gases pass on by way of line 6 to a
corresponding combined second stage scrubber and entrainment
separator 7 in which the gases are scrubbed with water
supplied via line 8 to each scrubber-separator 7 at a rate
of approximately 7175 U.S. gallons/h (27150 litres/h).
After passage through a demister (not shown) the flue gas
passes on via line 9 to a corresponding one of the absorbers
10 of a conventional Wellman-Lord plant for removal of
sulphur dioxide. Again, there are twelve absorbers 10 but,
for the sake of simplicity, only one absorber 10 is shown in
the drawing. In passage through absorbers 10 the flue gas
is scrubbed with an aqueous sodium sulphite solution which
absorbs $SO_2$ from the flue gas to form sodium bisulphite;
this scrubbing solution is supplied via line 11. The
treated flue gas, now essentially free of HCl and of $SO_2$,
passes through demister 12 and exits the plant via line 13
for passage to an exhaust stack (not shown). Spent
scrubbing solution is collected in the bottom of each
absorber 10 and is pumped through line 14 to a heater (not shown) and then to a corresponding desorber 15 in which
sodium bisulphite is decomposed to regenerate sodium
sulphite and release $SO_2$ which is removed from the plant
via line 16. Such $SO_2$ can then be cooled or compressed to
provide a liquid $SO_2$ product or passed to a sulphuric acid
plant or to a sulphur plant. Regenerated sodium sulphite-
containing scrubbing solution is recycled from desorber 15
to absorber 10 via line 11. Further details of the
Wellman-Lord process can be obtained, for example, from
United States Patent Specifications Nos. 3607037, 3653812
and 3790660 as well as from British Patent Specifications
Nos. 1557294 and 1557295; the disclosure of each of these
prior patent specifications is herein incorporated by
reference.

HCl-loaded liquor is withdrawn from the bottom of
each scrubber 3 through line 17 by means of pump 18 which
recirculates the liquor via line 4 to header system 5.
Scrubbing water is also recirculated to second stage
scrubber 7 by means of pump 19 and line 20, whilst a bleed
stream of scrubbing water is withdrawn from second stage
scrubber 7 by means of line 21 and combined with the
recirculating calcium chloride scrubbing solution in line
17. The rate of supply of water via line 8 balances the
rate of withdrawal of water in the bleed stream in line 21
and the rate of pick-up of water vapour by the flue gas in
passage through second stage scrubber 7.

A bleed stream of the recirculating calcium
chloride solution supplied to the Venturi scrubbers 3 is
taken from the header system 5 through line 22 at a rate of
approximately 3750 U.S. gallons/h (14200 litres/h) and is
passed to a pH sensor 23. This is coupled to a controller
24 which controls the operation of a valve 25 in line 26
through which a lime slurry can be pumped into line 17.

The lime slurry is prepared in lime slurrying tank 27 which is supplied with water at a rate of approximately 1300 U.S. gallons/h (4925 litres/h) via line 28 and with lime via line 29 at a rate of approximately 3.28 tonnes/h. Reference numeral 30 indicates a pair of lime bunkers which are supplied, as shown by arrow 31, with hydrated lime delivered to the site by road tankers (not shown). A screw conveyor 32 is used to supply line 29 from bunkers 30. Control of water supplied through line 28 is achieved by means of valve 33 which is in turn controlled by a lime slurry density sensor 34 fitted to slurrying tank 27. Slurrying tank 27 is further provided with an agitator 35. Mixing is also provided by pump 36 which recirculates slurry to slurrying tank 27 via lines 37, 38 and 39. Pump 36 also serves to pump lime slurry through line 26 at the rate controlled by valve 25. In this way, the pH of the recirculating calcium chloride solution supplied to the Venturi scrubbers 3 via the header system 5 can be maintained at a desired pH value in the range of from about 1.5 to 2.0, e.g. about 1.7, the added lime serving to neutralise the HCl absorbed from the flue gas in scrubber 3.

After passing pH sensor 23, the bleed stream in line 22 is neutralised to a pH of approximately 7.0 in neutralising tank 40 which is fitted with an agitator 41 and is supplied with lime slurry through line 42 by means of pump 36. Control of the rate of supply of lime slurry through line 42 is achieved by means of valve 43 which is controlled by a pH sensor and controller 44. Neutralised liquor from tank 40 is passed through line 45 by means of pump 46 to a pressure filter 47 which serves to filter off fly ash. The fly ash filtered from the neutralised liquor is removed as indicated by line 48.

The clarified liquor passes on from filter 47 through line 49 to evaporator 50 from which water vapour is removed overhead through line 51. The resulting concentrated liquor, now typically containing about 70 wt % calcium chloride, is recovered from evaporator 50 through line 52 and is recirculated through line 53 and heater 54 by means of pump 55 to join the fresh feed in line 49 for supply to the top of evaporator 50. Steam is supplied to heater 54 through line 56.

Part of the concentrated liquor in line 52 is withdrawn through line 57 and passed to a dryer 58 which is heated by means of a fuel (such as natural gas) or high pressure steam supplied via line 59. Combustion products or steam or condensate are removed via line 60. The resulting calcium chloride flake product is passed (as indicated by line 61) at a rate of about 4.74 tonnes/h to a product storage and handling area 62 from which it is distributed to end users as shown by arrow 63.

Although the illustrated plant utilises the Wellman-Lord process for $SO_2$ recovery, it will be appreciated by the skilled reader that other forms of $SO_2$ recovery process can be used instead. For example, the Wellman-Lord plant 10 to 16 can be replaced by a magnesium oxide-based $SO_2$ absorption plant, a double alkali $SO_2$ absorption plant, or a lime-gypsum $SO_2$ absorption plant. Similarly, the process of the invention is not limited to operation with flue gases from coal-fired plants; it can equally well be used for cleaning up incinerator off-gases, for example vinyl chloride plant incinerator off-gases, brickworks flue gases, smelter off-gases and the like.

The invention is further illustrated in the following Example.

Example

A calcium chloride solution was prepared using 30wt% of fused granular calcium chloride (technical grade) and its pH was adjusted to about 3 using hydrochloric acid. Sufficient of this solution was placed in a 3 1 aspirator to provide a liquid depth of about 20 cm and the aspirator was completely immersed in a water bath maintained at 60°C. The aspirator was provided with a gas inlet tube leading to a sintered glass distributor near the bottom of the solution, with a pH electrode, and with a gas outlet tube fitted with a glass wool filter to prevent carry-over of splashes of the calcium chloride solution.

A simulated flue gas was prepared by bubbling 0.5 1/min of nitrogen through two gas-wash bottles in series containing 20 wt % hydrochloric acid maintained at 17°C, The resulting HCl-containing gas was then mixed with 30 ml/min of 2.5 vol % $SO_2$ in nitrogen. The concentration of $SO_2$ in the simulated flue gas was determined by bubbling it through a solution containing a known amount of iodine (10 ml of 0.1 N $I_2$), whilst the HCl concentration was determined by bubbling through 10 ml of 0.01 N sodium hydroxide (using xylene cyanol screened methyl orange indicator).

Analysis of the exit gases for $SO_2$ was carried out by bubbling through standard iodine solution. Hydrogen chloride was collected in distilled water for analysis by ion chromatography (using a Model 14 Ion Chromatograph sold by Dionex Corporation).

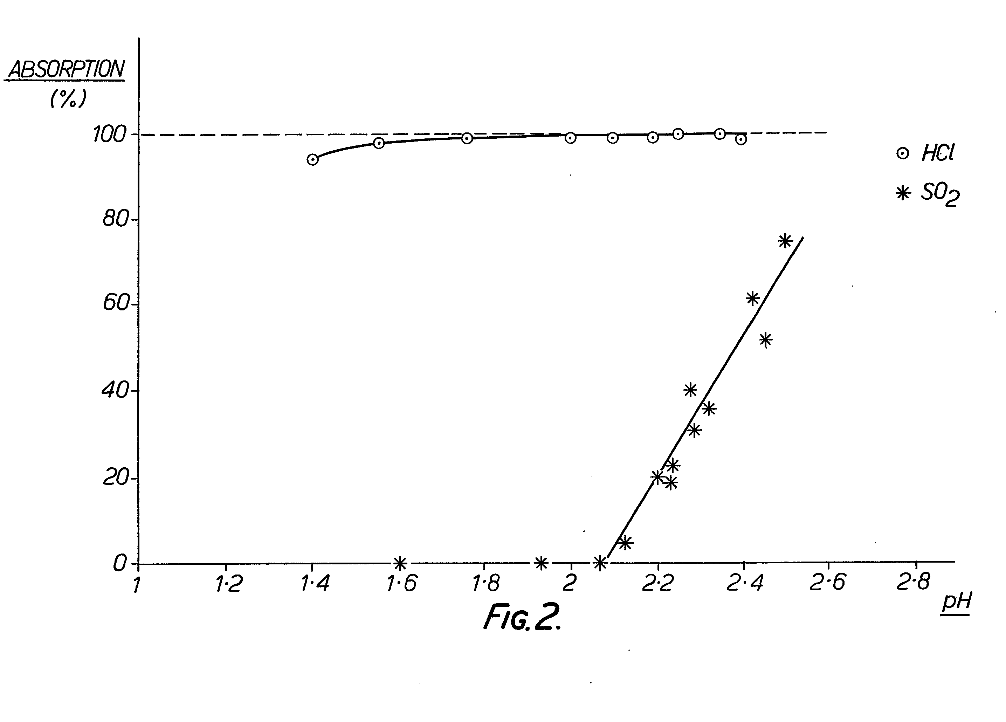

Readings were taken at a variety of pH values, the results of which are plotted in Figure 2 of the accompanying drawings. pH adjustment was effected by addition of hydrochloric acid to the calcium chloride solution.

As can be seen from Figure 2, HCl can be selectively absorbed from a gas containing both HCl and $SO_2$ over a pH range of from about 1.4 to about 2.1 using an aqueous 30 wt % calcium chloride solution at $60^{\circ}C$ with negligible simultaneous absorption of $SO_2$.

CLAIMS:

1.      A process for the selective removal of hydrogen halide from a gas containing same comprising intimately contacting the gas with an aqueous liquor containing a water soluble halide dissolved therein whose pH lies in the range of from about 0.1 to about 3.0.

2.      A process according to Claim 1 in which the hydrogen halide containing gas is scrubbed with a recirculating aqueous liquor containing a water soluble halide dissolved therein and the pH of the recirculating liquor is maintained within the range of from about 0.1 to about 3.0 by controlled addition of an alkali thereto.

3.      A process according to Claim 2, in which the cation of the alkali used for neutralisation is the same as the cation of the water soluble halide.

4.      A process according to any one of Claims 1to 3, in which the aqueous liquor contains at least about 3 wt % up to the solubility limit of t he halide in the aqueous liquor.

5.      A process according to any one of Claims 1 to 4, in which the water soluble halide contains the halide ion of the hydrogen halide to be absorbed.

6.      A process according to any one of Claims 1 to 5, in which the water soluble halide is an alkali metal or alkaline earth metal halide, preferably selected from calcium chloride, calcium bromide, calcium iodide, potassium chloride and potassium fluoride.

7.      A process according to any one of Claims 1 to 6, in which the pH of the liquor lies in the range of from about 0.1 to about 2.5, preferably in the range of from about 1.5 to about 2.0.

8.      A process according to any one of Claims 1 to 7, in which the aqueous liquor containing from about 3 wt % to about 70 wt % of calcium chloride, and its pH lies in the range of from about 0.1 to about 2.8.

9.      A process according to Claim 8, in which the gas is scrubbed with a recirculating liquor, the pH of which is maintained within the desired range by controlled addition of lime and/or milk of lime thereto.

10.     A process according to Claim 9, in which a portion of the recirculating liquor is taken and neutralised prior to disposal.

11.     A process according to Claim 10, in which the recirculating liquor contains from about 3 wt % to about 6 wt % calcium chloride

12.    A process according to Claim 10, in which the recirculating liquor contains about 30 wt % calcium chloride.

13.    A process according to Claim 12, in which the recirculating liquor is concentrated to about 70 wt % and converted to calcium chloride flake.

FIG.1.

0046387

Fig.2.

European Patent Office

**EUROPEAN SEARCH REPORT**

0046387

Application number

EP 81 30 3717

## DOCUMENTS CONSIDERED TO BE RELEVANT

| Category | Citation of document with indication, where appropriate, of relevant passages | Relevant to claim |
|---|---|---|
| | DE - A - 2 808 364 (H. HÖLTER) <br><br> * pages 6-8; figures * <br><br> -- | 1-3,7-9 |
| A | US - A - 2 826 816 (W.R. McCOR-MICK) <br><br> * figures; column 4, lines 50-65 * <br><br> -- | 9 |
| A | DE - A - 2 735 566 (METALLGE-SELLSCHAFT A.G.) <br><br> ------- | |

**CLASSIFICATION OF THE APPLICATION (Int. Cl.³)**

B 01 D 53/34

**TECHNICAL FIELDS SEARCHED (Int. Cl.³)**

B 01 D 53/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 25-11-1981 | BOGAERTS |

EPO Form 1503.1  06.78